# EUROPÄISCHE PATENTSCHRIFT

(11) **EP 3 894 688 B1**
(45) Veröffentlichungstag und Bekanntmachung des Hinweises auf die Patenterteilung: **14.02.2024**
(21) Anmeldenummer: 19813794.5
(22) Anmeldetag: 02.12.2019
(51) Int. Cl.: F02M 63/00, F02M 21/02, F02M 51/06, F02M 61/20, H01F 7/08

(54) **ELEKTROMAGNETISCH BETÄTIGBARES DOSIERVENTIL**
ELECTROMAGNETICALLY ACTUATED METERING VALVE
SOUPAPE DE DOSAGE À ACTIONNEMENT ÉLECTROMAGNÉTIQUE

(30) Priorität: 10.12.2018 DE 102018221289
(43) Veröffentlichungstag der Anmeldung: 20.10.2021
(73) Patentinhaber: Robert Bosch GmbH, 70442 Stuttgart (DE)
(72) Erfinder: HAINBERGER, Martin, 4020 Linz (AT); SCHMITZBERGER, Markus, 4073 Wilhering (AT)
(86) Internationale Anmeldenummer: PCT/EP2019/083241
(87) Internationale Veröffentlichungsnummer: WO 2020/120185

(56) Entgegenhaltungen:
- WO-A1-94/19599
- WO-A1-2016/162191
- DE-A1-102014 219 019
- DE-A1-102015 206 207

## Beschreibung

Die Erfindung betrifft ein elektromagnetisch betätigbares Dosierventil für Flüssigkeiten und/oder Gase mit den Merkmalen des Oberbegriffs des Anspruchs 1.

Bevorzugter Einsatzbereich des vorgeschlagenen Dosierventils ist die Brennstoffversorgung einer Verbrennungskraftmaschine, wobei es sich insbesondere um einen Gasmotor oder einen Gas-Diesel-Motor eines Fahrzeugs, beispielsweise eines Personenkraftfahrzeugs, eines Nutzfahrzeugs, eines Schienenfahrzeugs oder eines Schiffs handeln kann. Neben mobilen Anwendungen ist auch der Einsatz des Dosierventils in stationären Anlagen zur Energiegewinnung oder Energieerzeugung möglich.

Bei dem Dosierventil kann es sich insbesondere um ein CV-Gasventil, ein "Large Engine Gas Valve" (LEGV), ein "Multiport Injection Valve" (MPI) oder ein "Ported Fuel Injection" (PFI) Valve handeln.

### Stand der Technik

Zum Einblasen von Gas werden in der Regel elektromagnetisch betätigbare Ventile eingesetzt, um einen definierten Ventilquerschnitt zu öffnen. Über den geöffneten Ventilquerschnitt strömt Gas unter einem Zuströmdruck p₁ in einen Brennraum oder einem dem Brennraum vorgelagerten Ansaugtrakt, in dem ein Druck p₂ herrscht, der niedriger als der Zuströmdruck p₁ ist. Da das eingeblasene Gasvolumen im Wesentlichen von der Druckdifferenz p₁/p₂ und der Öffnungsdauer des Ventils abhängt, wird zur Volumensteuerung lediglich die Bestromungszeit des elektromagnetischen Aktors des Ventils variiert, um eine gewünscht lange oder kurze Öffnungsdauer zu realisieren.

Je größer die Druckdifferenz p₁/p₂ ist, desto höher sind die Dichtheitsanforderungen im geschlossenen Zustand des Ventils. Die erforderliche Abdichtung wird dabei über den Dichtkontakt zwischen einem Ventilsitzelement und einem Ventilschließelement bewirkt. Dieser ist jedoch über die Lebensdauer des Ventils einer hohen Belastung und damit einem hohen Verschleiß ausgesetzt. Um den Dichtheitsanforderungen über die Lebensdauer des Ventils zu genügen, gilt es daher den Verschleiß im Bereich des Dichtkontakts zu minimieren. Geeignete Maßnahmen sehen beispielsweise eine Führung und/oder Zentrierung des Ventilschließelements vor, damit dieses optimal, insbesondere planparallel, in Bezug auf das Ventilschließelement ausgerichtet ist. Aufgrund von Fertigungs- und/oder Montagetoleranzen kann jedoch ein völlig planparalleles Schließen nicht immer gewährleistet werden, so dass es hinsichtlich der Dichtheit und damit der Dosiergenauigkeit zu Schuss/Schuss und/oder Exemplar/Exemplar Streuungen kommt.

Aus der WO 94/19599 A1 ist ein elektromagnetisch betätigbarer Kraftstoffinjektor bekannt mit einem asymmetrischen Magnetanker. Die DE 10 2014 219 019 A1 zeigt ein Gasventil mit einem federbeaufschlagten Prallkörper zur Verschleißminderung und DE 10 2015 206 207 A1 ein weiteres Gasventil mit einem Magnetanker, der von exzentrisch angeordneten Schließfedern beaufschlagt ist.

Der vorliegenden Erfindung liegt die Aufgabe zugrunde, ein elektromagnetisch betätigbares Dosierventil für Flüssigkeiten und/oder Gase anzugeben, das eine möglichst definierte Öffnungs- und Schließkinematik aufweist, um die vorstehend genannten Nachteile zu reduzieren bzw. zu vermeiden. Insbesondere soll ein Dosierventil geschaffen werden, das weniger verschleißbehaftet ist und demzufolge eine hohe Lebensdauer sowie eine hohe Dosiergenauigkeit über die Lebensdauer aufweist.

Zur Lösung der Aufgabe wird das elektromagnetisch betätigbare Dosierventil mit den Merkmalen des Anspruchs 1 vorgeschlagen. Vorteilhafte Weiterbildungen der Erfindung sind den Unteransprüchen zu entnehmen.

### Offenbarung der Erfindung

Das vorgeschlagene elektromagnetisch betätigbare Dosierventil für Flüssigkeiten und/oder Gase umfasst ein Ventilgehäuse, einen mit dem Ventilgehäuse verbundenen Ventilsitzkörper, in dem mindestens eine Auslassöffnung ausgebildet ist, sowie einen gegenüber dem Ventilsitzkörper hubbeweglichen Magnetanker, der mit einem platten- oder tellerförmigen Ventilschließelement zum Freigeben und Verschließen der mindestens einen Auslassöffnung fest verbunden ist oder dieses ausbildet. Das heißt, dass der Magnetanker und das Ventilschließelement als ein Bauteil oder zumindest als eine Baueinheit ausgeführt sind. Das vorgeschlagene Dosierventil umfasst ferner einen dem Magnetanker an einem Arbeitsluftspalt gegenüberliegenden Magnetkern sowie mindestens eine den Magnetanker und das Ventilschließelement in Schließrichtung vorspannende Feder. Das heißt, dass das Dosierventil als stromlos geschlossenes Ventil ausgebildet ist. Das Dosierventil zeichnet sich erfindungsgemäß dadurch aus, dass der Magnetkern eine von einem rotationssymmetrischen Körper abweichende Form und/oder mindestens eine exzentrisch angeordnete Ausnehmung oder Erhebung aufweist, wodurch der Magnetanker und das Ventilschließelement gezielt asymmetrisch belastet werden. Die asymmetrische Belastung führt bzw. führen beim Öffnen und Schließen des Dosierventils zu einer nicht planparallelen Vorzugslage des Magnetankers und des Ventilschließelements in Bezug auf den jeweiligen Endanschlag, insbesondere in Bezug auf den Ventilsitzkörper bzw. den Dichtsitz. Somit wird aus einer undefinierten Imperfektion eine definierte Imperfektion, die berechenbar ist. Dies wiederum ermöglicht das Ergreifen von Gegenmaßnahmen, um das Dosierventil exakter auf die Anforderungen hinsichtlich Verschleiß, Prellverhalten und/oder Mengendrift auszulegen. Ferner treten durch die definierte Imperfektion andere, nicht beeinflussbare Streuungen, wie beispielsweise Material- und/oder Montagestreuungen, in den Hintergrund, was dazu beiträgt, dass Unterschiede, insbesondere im Hinblick auf die Einblasmenge, zwischen einzelnen Exemplaren reduziert werden.

Im Ergebnis trägt die definierte Imperfektion zu einem stabilen Öffnungs- und Schließverhalten des Dosierventils bei. Darüber hinaus wird die Anwendung von Auswerteroutinen zur softwareseitigen Überwachung des Öffnungs- und Schließverhaltens des Dosierventils vereinfacht. Das Anschlagen des Magnetankers und des Ventilschließelements am jeweiligen Endanschlag in einer nicht planparallelen Vorzugslage trägt zudem zu einer zeitlichen Ausdehnung des Anschlagvorgangs bei, so dass die maximal auftretende Belastungsspitze zum Anschlagzeitpunkt reduziert wird. Entsprechend sinkt die Impulsbelastung der betreffenden Bauteile.

Bevorzugt werden der Magnetanker und das Ventilschließelement durch Magnet- und/oder Federkräfte gezielt asymmetrisch belastet. Die nicht planparallele Vorzugslage wird demnach durch eine asymmetrische Krafteinleitung erreicht, wobei es sich sowohl um Magnetkräfte, als auch um Federkräfte handeln kann. "Asymmetrisch" bedeutet in diesem Zusammenhang, dass der Magnetanker und das Ventilschließelement nicht gleichmäßig belastet werden bzw. die angreifenden Magnet- und/oder Federkräfte ungleichmäßig über eine Kraftangriffsfläche verteilt sind. Dies führt dazu, dass der Magnetanker und das Ventilschließelement bei einer Hubbewegung eine leichte Schräglage einnehmen.

Eine asymmetrische Belastung bzw. Krafteinleitung kann beispielsweise dadurch bewirkt werden, dass die mindestens eine Feder exzentrisch in Bezug auf den Magnetanker und das Ventilschließelement angeordnet ist. Sofern mehrere exzentrisch angeordnete Federn vorgesehen sind, sind diese bevorzugt in unterschiedlichen Winkelabständen zueinander angeordnet und/oder unterscheiden sich hinsichtlich ihrer Federkraft. Über eine asymmetrische Einleitung der Federkraft der mindestens einen Feder kann sowohl das Öffnungs- als auch das Schließverhalten der hubbeweglichen Bauteile beeinflusst werden.

Die Ausnehmung im Magnetkern kann beispielsweise eine exzentrisch angeordnete Bohrung oder ein exzentrisch angeordneter Schlitz sein. Ferner kann der Magnetkern einen asymmetrisch angeordneten Absatz aufweisen, der zu einer asymmetrisch angeordneten Erhebung führt. Die Erhebung kann zudem durch ein exzentrisch angeordnetes Plateau ausgebildet werden. Analog der mindestens einen exzentrisch angeordneten Feder führt die vorgeschlagene Ausführung des Magnetkerns zu einer asymmetrischen Belastung bzw. Krafteinleitung, wobei über eine asymmetrische Einleitung der Magnetkraft lediglich das Öffnungsverhalten der hubbeweglichen Bauteile beeinflussbar ist.

Des Weiteren kann der Magnetkern eine Desachsierung gegenüber dem Magnetanker und/oder dem Ventilschließelement aufweisen. Auch diese Maßnahme führt zu einer asymmetrischen Krafteinleitung, so dass die vorstehend genannten Vorteile erreicht werden.

Alternativ oder ergänzend zu einer asymmetrischen Krafteinleitung kann bzw. können der Magnetanker und/oder das Ventilschließelement asymmetrisch geformt sein. Insbesondere kann bzw. können der Magnetanker und/oder das Ventilschließelement eine von einem rotationssymmetrischen Körper abweichende Form und/oder mindestens eine exzentrisch angeordnete Ausnehmung oder Erhebung aufweisen. Mittels einer asymmetrischen Formgebung der hubbeweglichen Bauteile wird zum Einen eine Schwerpunktverlagerung der bewegten Massen aus der Mitte heraus bewirkt. Zum Anderen wird eine asymmetrische Belastung erzielt, so dass die hubbeweglichen Bauteile beim Öffnen und Schließen eine Schräglage einnehmen. Die mindestens eine exzentrisch angeordnete Ausnehmung kann wiederum eine Bohrung oder ein Schlitz sein. Die Erhebung kann beispielsweise durch einen asymmetrischen Absatz oder ein exzentrisch angeordnetes Plateau ausgebildet werden.

Ferner kann bzw. können der Magnetanker, das Ventilschließelement und/oder der Magnetkern einen umfangseitigen Anschliff aufweisen.

Alternativ oder ergänzend wird vorgeschlagen, dass der Magnetanker eine Polfläche aufweist, die in Schließstellung des Ventilschließelements gegenüber einer am Magnetkern ausgebildeten Polfläche geneigt ist. Die Schräglage des Magnetankers in Bezug auf den Magnetkern ist daher bereits von vornherein vorgegeben und stellt sich nicht erst bei einer Hubbewegung des Magnetankers ein. Zudem führt diese Ausgestaltung des Magnetankers zu einer asymmetrischen Belastung bzw. Krafteinleitung, so dass sich die Schräglage beim Öffnen weiter verstärkt.

Die zur Lösung der eingangs genannten Aufgabe vorgeschlagen Maßnahmen können einzeln oder in unterschiedliche Kombinationen grundsätzlich bei allen Ventilen eingesetzt werden, an die hohe Anforderungen hinsichtlich Robustheit und/oder an die Zahl der Lastwechsel in Kombination mit geringen zulässigen Leckagewerten gestellt werden. Dies betrifft insbesondere Ventile, die zur Dosierung von gasförmigen Brennstoffen in Verbrennungskraftmaschinen eingesetzt werden. In der Regel handelt es sich hierbei um Schaltventile, mit Dichtkanten, wobei die Dichtkanten starken Belastungen ausgesetzt sind und/oder hohen Dichtheitsanforderungen unterliegen. Ferner können die Dichtkanten zumindest bereichsweise aus einem metallischen Werkstoff und/oder Kunststoff gefertigt sein. Alternativ oder ergänzend können die Dichtkanten zumindest bereichsweise beschichtet sein.

Bei einem Verfahren zum Betreiben eines elektromagnetisch betätigbaren Dosierventils für Flüssigkeiten und/oder Gase wird auf einen hubbeweglichen Magnetanker eingewirkt, der zum Freigeben und Verschließen mindestens einer in einem Ventilsitzkörper ausgebildeten Auslassöffnung mit einem platten- oder tellerförmigen Ventilschließelement fest verbunden ist oder dieses ausbildet. Das Ventilschließelement ist dabei durch mindestens eine Feder in Schließrichtung vorgespannt. Erfindungsgemäß werden der Magnetanker und das Ventilschließelement gezielt asymmetrisch belastet, so dass sie bei einer Hubbewegung eine von einer planparallelen Ideallage abweichende definierte Schräglage einnehmen. Die Schräglage führt zu einer nicht planparallelen, aber definierten Vorzugslage in Bezug auf den Magnetkern (beim Öffnen) bzw. in Bezug auf den Ventilsitzkörper (beim Schließen), so dass aus einer undefinierten Imperfektion eine berechenbare definierte Imperfektion wird. Entsprechend können Gegenmaßnahmen ergriffen werden, die den Verschleiß reduzieren, wobei die Schräglage zu längeren Anschlagzeiten an den jeweiligen Endanschlägen und damit bereits zu einer Reduzierung der Spitzenbelastung beim Anschlagen führt. Im Übrigen sind die gleichen Vorteile erreichbar, die bereits zuvor in Verbindung mit dem erfindungsgemäßen Dosierventil ausführlich beschrieben wurden, so dass auf diesen Teil der Beschreibung verwiesen wird.

Bevorzugt werden der Magnetanker und das Ventilschließelement durch Magnet- und/oder Federkräfte gezielt asymmetrisch belastet. Das heißt, dass das Öffnungs- und Schließverhalten mittels der verfügbaren Kräfte beeinflusst wird, so dass das Verfahren einfach durchzuführen ist. Die asymmetrische Belastung bzw. Krafteinleitung kann durch eine asymmetrische, insbesondere nicht rotationssymmetrische Formgebung des Magnetankers, des Ventilschließelements und/oder des Magnetkerns unterstützt werden.

Bevorzugte Ausführungsformen der Erfindung werden nachfolgend anhand der beigefügten Zeichnungen näher erläutert. Diese zeigen:
Fig. 1 einen schematischen Längsschnitt durch ein Dosierventil, bei dem die Erfindung umgesetzt werden kann,

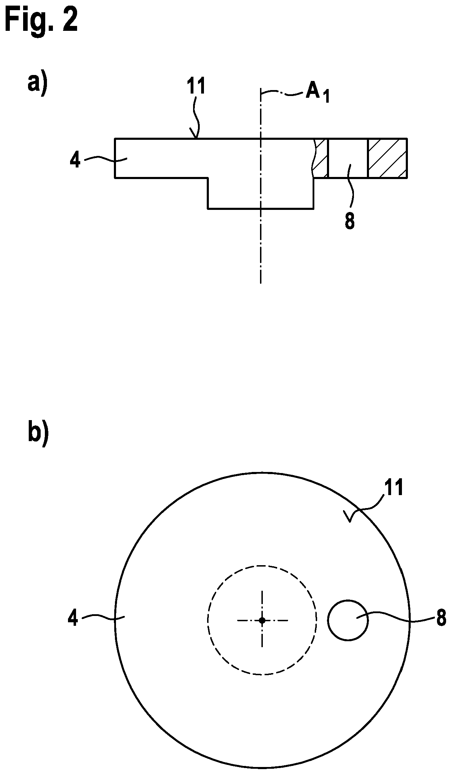

Fig. 2 a) einen schematischen Längsschnitt durch und b) eine Draufsicht auf den Magnetanker des Dosierventils der Fig. 1,
Fig. 3 a) einen schematischen Längsschnitt durch und b) eine Draufsicht auf einen Magnetanker eines weiteren, nicht erfindungsgemäßen Dosierventils,
Fig. 4 a) einen schematischen Längsschnitt durch und b) eine Draufsicht auf einen Magnetanker eines ebenfalls nicht erfindungsgemäßen Dosierventils,
Fig. 5 a) einen schematischen Längsschnitt durch und b) eine Draufsicht auf einen Magnetanker und einen Magnetkern eines erfindungsgemäßen Dosierventils gemäß einer vierten bevorzugten Ausführungsform,
Fig. 6 einen schematischen Längsschnitt durch einen Magnetanker und einen Magnetkern eines erfindungsgemäßen Dosierventils gemäß einer fünften bevorzugten Ausführungsform.

### Ausführliche Beschreibung der Zeichnungen

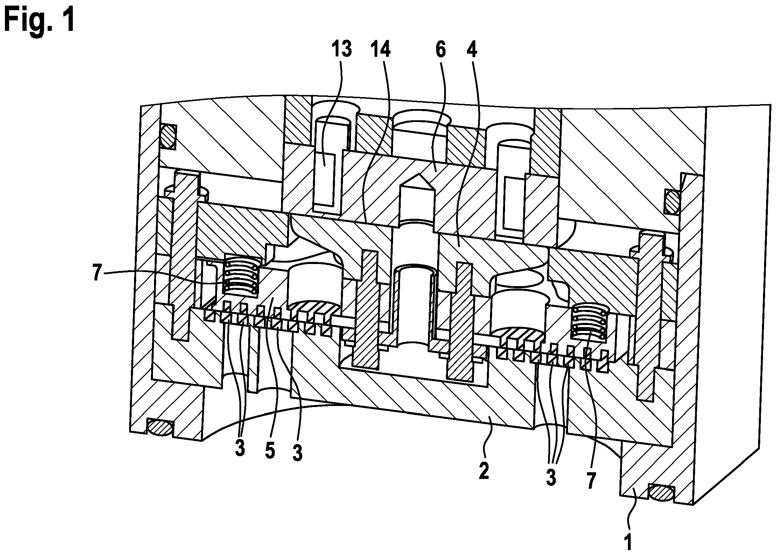

Das in der Fig. 1 dargestellte elektromagnetisch betätigbare Dosierventil dient dem Einblasen eines gasförmigen Mediums, insbesondere eines gasförmigen Brennstoffs in einen Ansaugtrakt eines Verbrennungsmotors. Es umfasst ein im Wesentlichen hohlzylinderförmiges Ventilgehäuse 1, in das ein plattenförmiger Ventilsitzkörper 2 eingesetzt ist. Im Ventilsitzkörper 2 sind mehrere kreisbogenförmig verlaufende und konzentrisch angeordnete Auslassöffnungen 3 ausgebildet, über welche das gasförmige Medium bei geöffnetem Ventil in den Ansaugtrakt eingeblasen wird. In der Fig. 1 ist das Dosierventil geschlossen dargestellt, wobei eine Magnetspule 13 eines Magnetaktor unbestromt bzw. stromlos ist. Mittels der Magnetspule 13 kann auf einen hubbeweglichen Magnetanker 4 eingewirkt werden, der mit einem plattenförmigen Ventilschließelement 5 zum Verschließen der im Ventilsitzkörper 2 ausgebildeten Auslassöffnungen 3 verbunden ist. Der Hub des Magnetankers 4 und des Ventilschließelements 5 wird dabei einerseits durch den Ventilsitzkörper 2, andererseits durch einen ringförmigen Hubanschlag begrenzt, der einen Magnetkern 6 umgibt, der dem Magnetanker 4 an einem Arbeitsluftspalt 14 gegenüberliegt. Das Ventilschließelement 5 und der Magnetanker 4 sind in Schließrichtung, das heißt gegen den Ventilsitzkörper 2, durch mehrere Federn 7 vorgespannt.

Zum Öffnen des Dosierventils wird die Magnetspule 13 bestromt, so dass ein Magnetfeld ausgebildet wird, dessen Magnetkraft auf den Magnetanker 4 in der Weise einwirkt, dass dieser sich in Richtung des Magnetkerns 6 bewegt, um den Arbeitsluftspalt 14 zu schließen. Das mitgeführte Ventilschließelement 5 hebt dabei vom Ventilsitzkörper 2 ab und gibt die Auslassöffnungen 3 frei. Zum Schließen des Dosierventils wird die Bestromung der Magnetspule 13 beendet, so dass die Federkräfte der Federn 7 den Magnetanker 4 und das Ventilschließelement 5 in ihre Ausgangslage zurückstellen.

Beim Schließen des Dosierventils werden die am Ventilschließelement 5 und am Ventilsitzkörper 2 ausgebildeten Dichtflächen einer hohen Belastung und damit einem hohen Verschleiß ausgesetzt. Über die Lebensdauer des Dosierventils kann es somit zu Undichtigkeiten kommen, welche die Dosiergenauigkeit herabsetzen. Zugleich sinkt die Lebensdauer des Dosierventils.

Um dem entgegenzuwirken werden die Hubbewegungen des Magnetankers 4 gezielt beeinflusst, so dass aus einer nicht perfekten undefinierten Bewegung eine zwar weiterhin nicht perfekte, aber definierte und damit berechenbare Bewegung wird. Dazu weist der Magnetkern 6 eine von einem rotationssymmetrischen Körper abweichende Form und/oder mindestens eine exzentrisch angeordnete Ausnehmung 8 oder Erhebung 9 auf, wie beispielsweise einen umfangseitigen Anschliff 10.

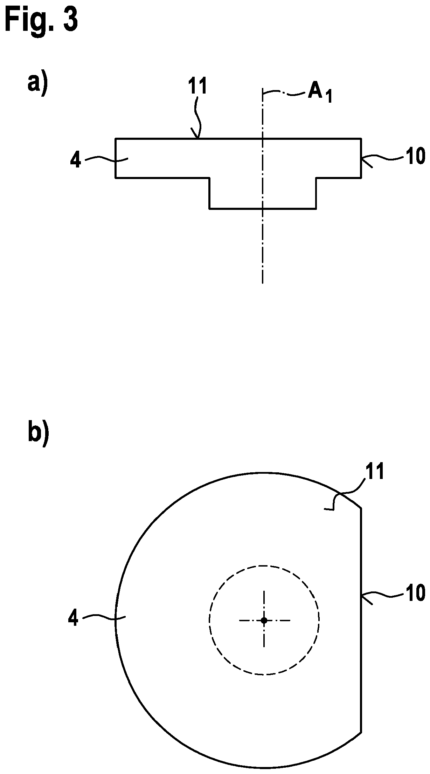

Wie beispielhaft in den Figuren 3a und 3b, 4a und 4b, 5a und 5b sowie 6 dargestellt, kann eine definierte Vorzugslage durch weitere Maßnahmen unterstützt werden, die zusätzlich oder kumulativ zur Anwendung gelangen können. Diese Maßnahmen können den Magnetanker 4, das Ventilschließelement 5 und/oder den Magnetkern 6 betreffen.

Wie beispielhaft in den Figuren 3a und 3b dargestellt, kann der Magnetanker 5 und/oder das Ventilschließelement 5 und/oder der (nicht dargestellte) Magnetkern 6 einen umfangseitigen Anschliff 10 aufweisen.

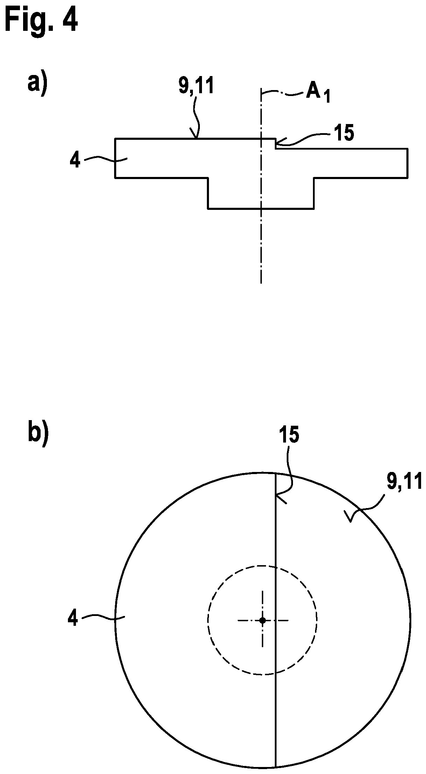

Wie ferner beispielhaft in den Figuren 4a und 4b dargestellt, kann der Magnetanker 4 zusätzlich zum Magnetkern 6 einen asymmetrischen Absatz 15 aufweisen, der zu einer exzentrisch angeordneten Erhebung 9 im Bereich einer Polfläche 11 des Magnetankers 4 (oder im Bereich einer Polfläche 12 des Magnetkerns 6) führt.

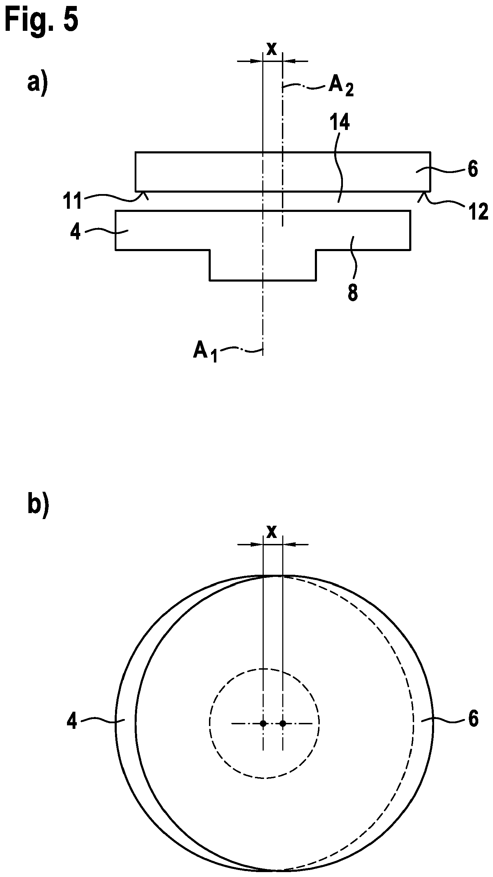

Alternativ oder ergänzend kann eine gezielte Desachsierung vorgenommen werden, so dass eine Längsachse A₁ des Magnetankers 4 und eine Längsachse A₂ des Magnetkerns 6 nicht zusammenfallen, sondern zueinander in einem Abstand x beabstandet sind. Diese Ausführungsform ist beispielhaft in den Figuren 5a und 5b dargestellt.

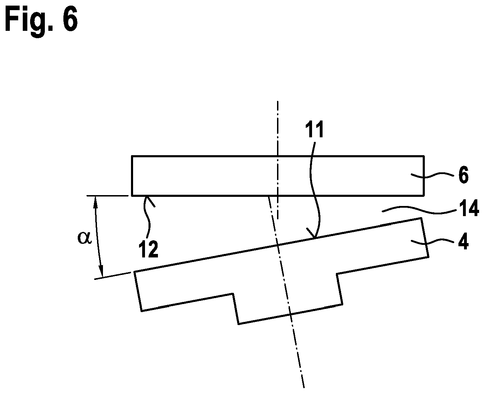

Des Weiteren kann bereits eine Schräglage des Magnetankers 4 in Bezug auf den Magnetkern 6 durch nicht parallele Polflächen 11, 12 vorgegeben sein. Das heißt, dass der Arbeitsluftspalt 14 über die Polflächen 11, 12 hinweg variiert. Dieses Ausführungsbeispiel ist in der Fig. 6 dargestellt.

Alternativ oder ergänzend können die in der Fig. 1 dargestellten Federn 7 in ungleichmäßigen Winkelabständen angeordnet werden, so dass die Vorspannkräfte über den Umfang des Ventilschließelements 5 variieren. Ferner ist der Einsatz von unterschiedlich starken Federn 7 möglich.

## Patentansprüche

1. Elektromagnetisch betätigbares Dosierventil für Flüssigkeiten und/oder Gase, umfassend ein Ventilgehäuse (1), einen mit dem Ventilgehäuse (1) verbundenen Ventilsitzkörper (2), in dem mindestens eine Auslassöffnung (3) ausgebildet ist, sowie einen gegenüber dem Ventilsitzkörper (2) hubbeweglichen Magnetanker (4), der mit einem platten- oder tellerförmigen Ventilschließelement (5) zum Freigeben und Verschließen der mindestens einen Auslassöffnung (3) fest verbunden ist oder dieses ausbildet, ferner umfassend einen dem Magnetanker (4) an einem Arbeitsluftspalt (14) gegenüberliegenden Magnetkern (6) sowie mindestens eine den Magnetanker (4) und das Ventilschließelement (5) in Schließrichtung vorspannende Feder (7),
**dadurch gekennzeichnet, dass** der Magnetkern (6) eine von einem rotationssymmetrischen Körper abweichende Form und/oder mindestens eine exzentrisch angeordnete Ausnehmung (8) oder Erhebung (9) aufweist, wodurch der Magnetanker (4) und das Ventilschließelement (5) asymmetrisch belastet werden.

2. Dosierventil nach Anspruch 1,
**dadurch gekennzeichnet, dass** der Magnetanker (4) und das Ventilschließelement (5) durch Magnet- und/oder Federkräfte gezielt asymmetrisch belastet werden.

3. Dosierventil nach Anspruch 1 oder 2,
**dadurch gekennzeichnet, dass** die mindestens eine Feder (7) exzentrisch in Bezug auf den Magnetanker (4) und das Ventilschließelement (5) angeordnet ist, wobei vorzugsweise mehrere Federn (7) in unterschiedlichen Winkelabständen zueinander angeordnet sind und/oder sich hinsichtlich ihrer Federkraft unterscheiden.

4. Dosierventil nach einem der vorhergehenden Ansprüche,
**dadurch gekennzeichnet, dass** der Magnetkern (6) eine Desachsierung gegenüber dem Magnetanker (4) und/oder dem Ventilschließelement (5) aufweist.

5. Dosierventil nach einem der vorhergehenden Ansprüche,
**dadurch gekennzeichnet, dass** der Magnetanker (4) und/oder das Ventilschließelement (5) eine von einem rotationssymmetrischen Körper abweichende Form und/oder mindestens eine exzentrisch angeordnete Ausnehmung (8) oder Erhebung (9) aufweist bzw. aufweisen.

6. Dosierventil nach einem der vorhergehenden Ansprüche,
**dadurch gekennzeichnet, dass** der Magnetanker (4), das Ventilschließelement (5) und/oder der Magnetkern (6) einen umfangseitigen Anschliff (10) aufweist bzw. aufweisen.

7. Dosierventil nach einem der vorhergehenden Ansprüche,
**dadurch gekennzeichnet, dass** der Magnetanker (4) eine Polfläche (11) aufweist, die in Schließstellung des Ventilschließelements (5) gegenüber einer am Magnetkern (6) ausgebildeten Polfläche (12) geneigt ist.

## Claims

1. Electromagnetically actuatable metering valve for liquids and/or gases, comprising a valve housing (1), a valve seat body (2) which is connected to the valve housing (1) and in which at least one outlet opening (3) is formed, and a magnetic armature (4) which can move in a stroke-like manner relative to the valve seat body (2) and which is fixedly connected to, or forms, a plate- or disc-shaped valve closing element (5) for opening and closing the at least one outlet opening (3), further comprising a magnetic core (6) opposite the magnetic armature (4) at a working air gap (14), and at least one spring (7) which preloads the magnetic armature (4) and the valve closing element (5) in the closing direction, **characterized in that** the magnetic core (6) has a shape deviating from a rotationally symmetrical body and/or has at least one eccentrically arranged cutout (8) or elevation (9), as a result of which the magnetic armature (4) and the valve closing element (5) are asymmetrically loaded.

2. Metering valve according to Claim 1,
**characterized in that** the magnetic armature (4) and the valve closing element (5) are asymmetrically loaded in a targeted manner by magnetic and/or spring forces.

3. Metering valve according to Claim 1 or 2, **characterized in that** the at least one spring (7) is arranged eccentrically with respect to the magnetic armature (4) and the valve closing element (5), wherein preferably a plurality of springs (7) are arranged at different angular distances from one another and/or differ in terms of their spring force.

4. Metering valve according to one of the preceding claims,
**characterized in that** the magnetic core (6) has an axial offset with respect to the magnetic armature (4) and/or the valve closing element (5).

5. Metering valve according to one of the preceding claims,
**characterized in that** the magnetic armature (4) and/or the valve closing element (5) have/has a shape deviating from a rotationally symmetrical body and/or have/has at least one eccentrically arranged cutout (8) or elevation (9) .

6. Metering valve according to one of the preceding claims,
**characterized in that** the magnetic armature (4), the valve closing element (5) and/or the magnetic core (6) have/has a circumferential bevel (10).

7. Metering valve according to one of the preceding claims,
**characterized in that** the magnetic armature (4) has a pole surface (11) which, in the closed position of the valve closing element (5), is inclined with respect to a pole surface (12) formed on the magnetic core (6).

## Revendications

1. Soupape de dosage actionnable électromagnétiquement pour liquides et/ou gaz, comprenant un boîtier de soupape (1), un corps de siège de soupape (2) relié au boîtier de soupape (1), dans lequel est réalisée au moins une ouverture de sortie (3), ainsi qu'un induit (4) mobile en translation par rapport au corps de siège de soupape (2), qui est relié fixement à un élément de fermeture de soupape (5) en forme de plaque ou de disque pour libérer et fermer l'au moins une ouverture de sortie (3) ou qui réalise celui-ci, comprenant en outre un noyau magnétique (6) situé en face de l'induit (4) au niveau d'un entrefer de travail (14) ainsi qu'au moins un ressort (7) qui précontraint l'induit (4) et l'élément de fermeture de soupape (5) dans la direction de fermeture,
**caractérisée en ce que** le noyau magnétique (6) présente une forme différente d'un corps à symétrie de révolution et/ou au moins un évidement (8) ou un bossage (9) agencé de manière excentrique, moyennant quoi l'induit (4) et l'élément de fermeture de soupape (5) sont chargés de manière asymétrique.

2. Soupape de dosage selon la revendication 1,
**caractérisée en ce que** l'induit (4) et l'élément de fermeture de soupape (5) sont chargés de manière asymétrique ciblée par des forces magnétiques et/ou élastiques.

3. Soupape de dosage selon la revendication 1 ou 2, **caractérisée en ce que** l'au moins un ressort (7) est agencé de manière excentrique par rapport à l'induit (4) et à l'élément de fermeture de soupape (5), plusieurs ressorts (7) étant de préférence agencés à des distances angulaires différentes les uns des autres et/ou différant en ce qui concerne leur force de ressort.

4. Soupape de dosage selon l'une quelconque des revendications précédentes,
**caractérisée en ce que** le noyau magnétique (6) présente un désaxage par rapport à l'induit (4) et/ou à l'élément de fermeture de soupape (5).

5. Soupape de dosage selon l'une quelconque des revendications précédentes,
**caractérisée en ce que** l'induit (4) et/ou l'élément de fermeture de soupape (5) présentent une forme différente d'un corps à symétrie de révolution et/ou au moins un évidement (8) ou un bossage (9) agencé de manière excentrique.

6. Soupape de dosage selon l'une quelconque des revendications précédentes,
**caractérisée en ce que** l'induit (4), l'élément de fermeture de soupape (5) et/ou le noyau magnétique (6) présentent un biseau périphérique (10).

7. Soupape de dosage selon l'une quelconque des revendications précédentes,
**caractérisée en ce que** l'induit (4) présente une surface polaire (11) qui, dans la position de fermeture de l'élément de fermeture de soupape (5), est inclinée par rapport à une surface polaire (12) réalisée sur le noyau magnétique (6).
